(19) Europäisches Patentamt

European Patent Office

Office européen des brevets

(11) Publication number: **0 252 220 B1**

(12) **EUROPEAN PATENT SPECIFICATION**

(45) Date of publication of patent specification: **08.07.92**  (51) Int. Cl.⁵: **D04H 3/04**, D04H 3/12

(21) Application number: **87104790.8**

(22) Date of filing: **01.04.87**

(54) **Method of manufacturing fabric samples.**

(30) Priority: **09.07.86 JP 161542/86**
     **30.07.86 JP 179433/86**

(43) Date of publication of application:
   **13.01.88 Bulletin  88/02**

(45) Publication of the grant of the patent:
   **08.07.92 Bulletin  92/28**

(84) Designated Contracting States:
   **CH DE FR GB IT LI**

(56) References cited:
   **FR-A- 982 420**
   **FR-A- 1 309 842**
   **FR-A- 2 199 026**
   **GB-A- 688 827**
   **US-A- 3 753 842**

(73) Proprietor: **Itoi, Toru**
   **861-11 Komatsuri-cho**
   **Kishiwada-shi Osaka-fu(JP)**

(72) Inventor: **Itoi, Toru**
   **861-11 Komatsuri-cho**
   **Kishiwada-shi Osaka-fu(JP)**

(74) Representative: **Goddar, Heinz J., Dr. et al**
   **FORRESTER & BOEHMERT Franz-**
   **Joseph-Strasse 38**
   **W-8000 München 40(DE)**

## Description

### BACKGROUND OF THE INVENTION

#### Field of the Invention

The present invention relates to a method of manufacturing fabric samples, and more particularly to a simple method of obtaining fabric samples substantially the same in pattern as the cut samples of woven fabrics.

#### Description of the Prior Art

In preparation for the mass production of a fabric by the use of weaving machine, a designer selects, first of all, each material, quality, color and density of warps and wefts according to the design of his own, and weaves the warps and wefts into a fabric sample by a special weaving machine for the exclusive use of manufacturing samples. The designer judges whether or not the woven samples are satisfactory, and should the samples prove unsatisfactory, he is required repeatedly to perform designing including the actual weaving work until the satisfactory result is obtained. The above refers to the general and conventional procedures for obtaining the satisfactory fabric samples.

However, the weaving machine exclusively used to manufacture fabric samples mentioned above has functions equivalent to those of weaving machines used for commercial production, so that the former machine becomes inevitably large in scale and high in production cost. Furthermore, in spite of the fact that no large sizes of fabrics are not required as the samples, large quantities of fabrics are woven by the former machine. This is uneconomical from the viewpoint of manufacturing the samples, and in addition the skillful work similar to the operation of the latter machine is required, involving designers into complicated weaving work. These are shortcomings of the conventional method of manufacturing fabric samples referred to above.

### SUMMARY OF THE INVENTION

Accordingly, it is a primary object of the present invention to provide a method capable of manufacturing fabric samples by means of using a simple machine of winding warps and wefts round a core-structure plate instead of using the conventional weaving machine for the exclusive use of manufacturing fabric samples, by which the cost of equipment is reduced.

Another object of the present invention is to provide a method enabling any unskilled person to manufacture fabric samples.

A further object of the present invention is to provide an economical method capable of manufacturing small size fabric samples exclusively to meet the usual requirements both for size and quantity as samples.

The above and other objects, features, and advantages of the present invention will become more apparent from the following description when taken in conjunction with the accompanying drawings.

### BRIEF DESCRIPTION OF THE DRAWINGS

Fig. 1 is a perspective view of a machine for winding warps and wefts round a core-structure plate;

Fig. 2 is a schematic illustration showing each color and number of warps and wefts when wound flatly round the core-structure plate;

Fig. 3 is a schematic view illustrating the step of applying an adhesive to warps and wefts wound round the core-structure plate;

Fig. 4 is a perspective view illustrating the step of heating the warps and wefts shown in Fig. 3;

Fig. 5 is a perspective view illustrating the state of a cut sample of fabric obtained from the continuous fabric structure after the heating step shown in Fig. 4; and

Fig. 6 is an enlarged perspective view of the warps and wefts bonded together with adhesive.

### DESCRIPTION OF THE PREFERRED EMBODIMENTS

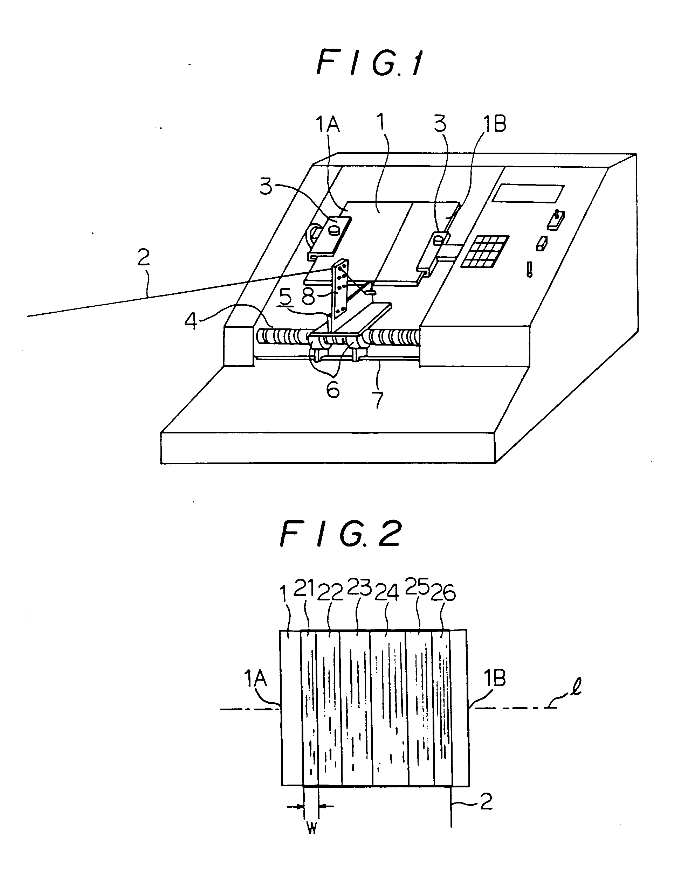

According to the novel features of the present invention, by the use of a machine shown in Fig. 1, warps 2 are wound round a core-structure plate 1 as illustrated in Fig. 2. Namely, the warps 2 are flatly wound round the core-structure plate 1 from one end 1A toward another end 1B, with the core-structure plate 1 being rotated centering on its axis of rotation $\ell$. In this case, each color and number of winding times of the warps 2 are changed in regular order during the winding process. In the example illustrated in Fig. 2, a first warp 21 red in color is wound by 15 times, a second warp 22 yellow in color is wound by 20 times, a third warp 23 green in color is wound by 25 times, a fourth warp 24 white in color is wound by 30 times, a fifth warp 25 red in color is wound by 20 times, and a sixth warp 26 gray in color is wound by 15 times. Thus, a stripe pattern different in width W and different in color each another is obtainable. It is to be noted that a Teflon-coated quadrangular metallic plate is employed as the core-structure plate 1 so that the warps and wefts may not be bonded to the core-structure plate by an adhesive during the processes described hereinafter.

Referring back to Fig. 1, the machine for winding warps and wefts round the core-structure plate 1 consists of two chucks 3, 3 facing each other and rotating in such a way as to hold both ends 1A and 1B of the core-structure plate 1, a worm gear 4 extending in the direction parallel with the core-structure plate 1, and a guide 5 which is moved by the worm gear in the direction parallel with the core-structure plate 1 for guiding the warps, which are being wound round the core-structure plate 1, in horizontal direction.

The guide 5 is provided with gear wheels 6, 6 engaging the worm gear 4, a stop-rotation guide rod 7, and a plate 8 having holes for passing the warps and wefts therethrough, whereby the pre-selected colored warps 2 drawn out of spindles not shown extend through any of the holes in the plate 8 of the guide 5 toward the core-structure plate 1. In repeatedly winding the warps round the core-structure plate 1, each pre-selectedly colored warp is kept at right angles to the axis of rotation $l$ of the core-structure plate 1, while the guide 5 moves in synchronous with the rotation of the core-structure plate 1. Thus, the pre-selectedly colored warps are wound round the core-structure plate 1 in such a way that the warps can be arranged flatly on the plate 1. For starting the winding work, the top of the first warp is fixed on the core-structure plate 1 by adhesive tape and the warp is wound round the plate 1 by the number of predetermined times; subsequently the end of the first warp is tied to the second warp and the latter warp is wound round the plate 1 by the number of predetermined times; thus, warps can be continuously wound round the plate 1. The machine shown in Fig. 1 is used to flately wound warps and wefts round the core-structure plate 1 by the number of predetermined times, and the machine is manufactured more easily as compared with the conventional machine which is used exclusively to weave fabric samples.

On completion of a stripe pattern by winding the warps 2 round the core-structure plate 1 as described above, the wefts 12 are wound round the core-structure plate 1, which has, in advance, to be changed its direction by an angle of 90° from the direction shown in Fig. 2 and has to be set to the chucks 3, 3. The wefts 12 shall be wound round the core-structure plate 1 onto the warps 2 in the direction at right angles to the warps 2, when the colors and number of winding times shall be changed in regular order as described above in winding the warps round the core-structure plate 1. Of course, such colors shall be pre-selected while the number of winding times shall be predetermined. Each one of the weft shall be wound in such a way as to keep at least spaces L, as the warps previously wound round are visible.

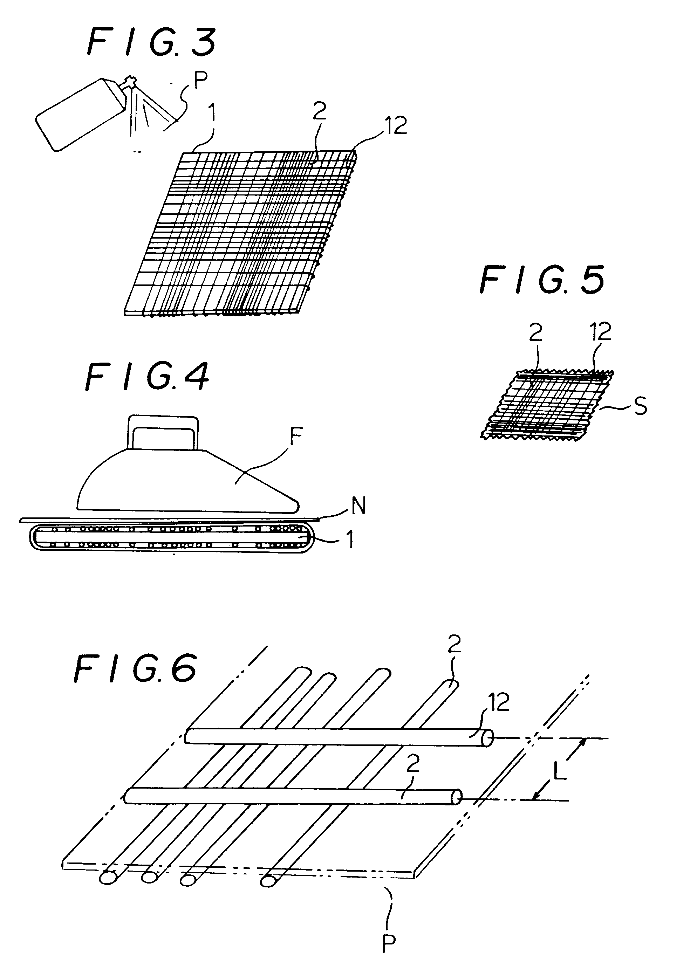

As shown in Fig. 3, by the use of sprayer , a thermosetting transparent synthetic resin adhesive P shall be applied to the whole surface of the fabric structure consisting of the warps 2 and the wefts 12, both of which are wound round the core-structure plate 1 according to the predetermined types of density in the direction at right angles to the plate 1 respectively.

The thermosetting transparent synthetic resin adhesive P referred to above is, for example, prepared by mixing hot-melt resin 600 microns or below in particle size and insoluble in volatile organic solvent, such as polyamide, polyester, polyethylene, ethylene-vinyl acetate resin, or the like, with 0.1 to 10% by weight of high-molecular hot-melt adhesive dissolved in volatile organic solvent.

The adhesive prepared as described above can bond warps to wefts at temperatures ranging from 70 to 90°C even if they are made of all-wool yarn and brings about a stronger adhesive force.

As shown in Fig. 4, a sheet of Teflon film N is placed over the warps and wefts, and the whole surface of them is pressed through the Teflon film N with an iron F set to temperatures ranging from 70 to 90°C for one or two minutes, whereby the warps 2 are bonded to the wefts 12 through the adhesive. Subsequently, by cutting the continuous fabric structure of the warps and wefts with a knife into a desired area, a fabric sample S is obtainable as shown in Fig. 5.

According to the method described above, the warps and wefts wound round the core-structure plate are coated with the transparent adhesive and are pressed through the Teflon film with the iron F and also are cut with the knife into a desired configuration. Therefore, the fabric sample thus obtained can be pasted on a sample card or board. And further, the thermosetting synthetic resin being used as the quick-drying adhesive, it is possible to rapidly obtain fabric samples. And also, the fabric samples can be manufactured at low cost even by any person who has no skill of weaving warps and wefts into fabrics, because the method described above requires only the machine for winding the warps and wefts round the core-structure plate without using a large scale weaving machine.

As to the application of the transparent adhesive and ironing the warps and wefts, the adhesive can be applied by means of spraying it upon the warps wound round the core-structure plate before winding the wefts round the warps on the plate and, after winding the wefts round the warps on the plate, the whole surface of the warps and wefts can be pressed with the iron through the Teflon film. By doing so, the adhesive is covered with the wefts. As a result, unnecessary luster does not appear on the surface of fabric samples after the adhesive has cured, and therefore fabric samples with natural feeling are obtainable.

The features disclosed in the foregoing description, in the claims and/or in the accompanying drawings may, both separately and in any combination thereof, be material for realising the invention in diverse forms thereof.

## Claims

1. Method of manufacturing fabric samples with warps and wefts which cross each other and which are attached to each other onto a core structure characterized by the steps:
   - winding warps on a core-structure plate by turning said plate on one axis of rotation,
   - winding wefts on said core-structure plate by turning said plate on another axis of rotation,
   - applying a transparent synthetic resin adhesive having a thermosetting property to the entirety of the wound warps and wefts,
   - pressing them with an iron from above a teflon film to solidify the adhesive and bond the wefts and warps together, and
   - cutting out predetermined portions of the area from said core-structure plate.

2. Method of manufacturing fabric sample according to claim 1, characterized in that said warps and wefts are changed in color and number of winding times in regular order according to directions in which said warps and wefts are wound, and said wefts are spaced at least spaces L away from the neighbouring wefts, whereby said warps are visible.

## Revendications

1. Procédé de confection d'échantillons d'étoffe avec des fils de chaîne et des fils de trame qui se croisent et sont unis les uns aux autres sur un noyau, caractérisé par les opérations suivantes :
   - enroulement de fils de chaîne sur une plaque noyau par rotation de celle-ci autour d'un axe de rotation,
   - enroulement de fils de trame sur la plaque noyau par rotation de celle-ci autour d'un autre axe de rotation,
   - application d'un adhésif à base de résine synthétique thermodurcissable transparent sur la totalité des fils de chaînes et de trame enroulés,
   - repassage de ceux-ci avec un fer d'au-dessus d'un film de Teflon pour solidifier l'adhésif et unir ensemble les fils de chaîne et les fils de trame, et
   - séparation d'avec la plaque noyau, par coupe, de parties déterminées de la surface.

2. Procédé de confection d'échantillons d'étoffe selon la revendication 1, caractérisé par le fait que la couleur et le nombre de spires d'enroulement des fils de chaîne et des fils de trame sont changés dans un ordre régulier d'après les directions dans lesquelles ceux-ci sont enroulés, et les fils de trame sont espacés au moins d'espaces (L) des fils de trame voisins afin que les fils de chaîne soient visibles.

## Patentansprüche

1. Verfahren zur Herstellung von Webmustern, mit einander kreuzenden Kett- und Schußfäden, die auf einem Kern aneinander angeordnet sind, gekennzeichnet durch die Schritte:
   - Wickeln von Kettfäden auf eine Kernplatte durch Drehen der Kernplatte um eine Drehachse,
   - Wickeln von Schußfäden auf die Kernplatte um eine andere Drehachse,
   - Aufbringen eines durchsichtigen, wärmeaushärtenden Kunststoffklebers auf die Gesamtheit der Kett- und Schußfäden,
   - Pressen mit einem Bügeleisen von oben auf eine Teflonfilm zum Aushärten des Kunststoffklebers und zum Verbinden der Kett- und Schußfäden miteinander, und
   - Ausschneiden bestimmter Abschnitte der Fläche von der Kernplatte.

2. Verfahren zur Herstellung von Webmustern nach Anspruch 1, dadurch gekennzeichnet, daß die Kettfäden und die Schußfäden in ihrer Farbe und der Anzahl der Wicklungszahl regelmäßig in der Richtung, in der die Kettfäden und die Schußfäden gewickelt werden, geändert werden, und daß die Schußfäden wenigstens einen Abstand L von den benachbarten Schußfäden haben, wodurch die Schußfäden sichtbar sind.

# F I G. 1

# F I G. 2

FIG.3

FIG.4

FIG.5

FIG.6